# EUROPEAN PATENT APPLICATION

(11) **EP 1 538 362 A1**
(43) Date of publication of application: **08.06.2005**
(21) Application number: 04078263.3
(22) Date of filing: 01.12.2004
(51) Int. Cl.: F16D 65/14

(54) **Mechanical device for the amplification of the braking and/or blocking power**

(30) Priority: 03.12.2003 IT MI20032369
(71) Applicant: Mondial S.p.A., 20124 Milano (IT)
(72) Inventor: Menegoz, Giuliano, 20124 Milan (IT)
(74) Representative: De Gregori, Antonella

(57) **Abstract**

A mechanical device for the amplification of the braking and/or blocking power comprising a supporting structure (11), hollow inside (in 15), suitable for being coupled with, on one side, a control actuator (12) for an inner sledge (14) and, on the other side, a controlled component (13) which acts outwardly, wherein the sledge (14) requires a shaped housing (17) containing a pair of opposing shaped contact bodies (18), oscillating in the end zones in contact each other and with external surfaces (19, 21). The control actuator (12) can be of the mechanical, pneumatic, hydraulic or electric type. The controlled component (13) is a stem or pole (13) which operates during braking, carrying friction material or which acts as a blocking element for other applications.

## Description

The present invention relates to a mechanical device for the amplification of the braking and/or blocking power.

Various types of particular arrangements are currently used in the known braking or blocking systems, which allow amplification of the power in different ways.

In existing braking systems, for example, power amplification devices are present, which are essentially based on the movement of an element provided with inclined surfaces. Said element, by means of the interposition of spheres or cylindrical rollers (also for reducing friction resistance), effects a movement with an increment in the available power in relation to the transmission ratio obtained.

Furthermore, other systems are known, based on hinged connecting rods, which exploit a geometrical arrangement similar to the connecting rod-handle system. These composite systems, when operating close to the upper dead point, are capable of generating a very high pushing power.

This latter type of power amplification system, however, has various limits, mainly due to its particular configuration. The main limit of this configuration, in fact, is that the amplification ratio is extremely variable, depending on the inclination of the connecting rods. This wide variation causes difficulties in controlling the behaviour of the system. It should be important, in fact, for the variation of the braking power to remain within a limited range, with respect to dimensional variations and/or shifting of the controlled element.

Due to the drawbacks of the known systems, such as that mentioned above, a general objective of the present invention is consequently to provide a mechanical amplification system of the braking and/or blocking power which allows the amplification of a force in a transversal direction with respect to the movement direction of an actuator (called control device) which accomplishes a certain run.

A further objective of the present invention is to provide a mechanical mechanism for the amplification of the braking and/or blocking power, based on simple elements, such as, for example, elements which act as connecting rods.

Another objective of the present invention is to provide a mechanical device for the amplification of the braking and/or blocking power capable of operating in a very compact complex to be used as a brake for linear movements based on structural guides or as blocking units for assembling, operating equipment, or the like.

These objectives according to the present invention are achieved by providing a mechanical device for the amplification of the braking and/or blocking power, as presented in claim 1.

Further characteristics of the invention appear in the subsequent claims.

The characteristics and advantages of a mechanical device for the amplification of the braking and/or blocking power according to the present invention will appear more evident from the following illustrative and non-limiting description, referring to the enclosed schematic drawings, wherein:
figure 1 is a schematic perspective view of an embodiment of the mechanical device for the amplification of the braking power according to the present invention,
figure 2 is a plan view from above, showing an enlarged detail of a device of the invention in two extreme positions of its functioning.

With reference to the figures, an embodiment is shown of the mechanical device for the amplification of the braking and/or blocking power according to the invention.

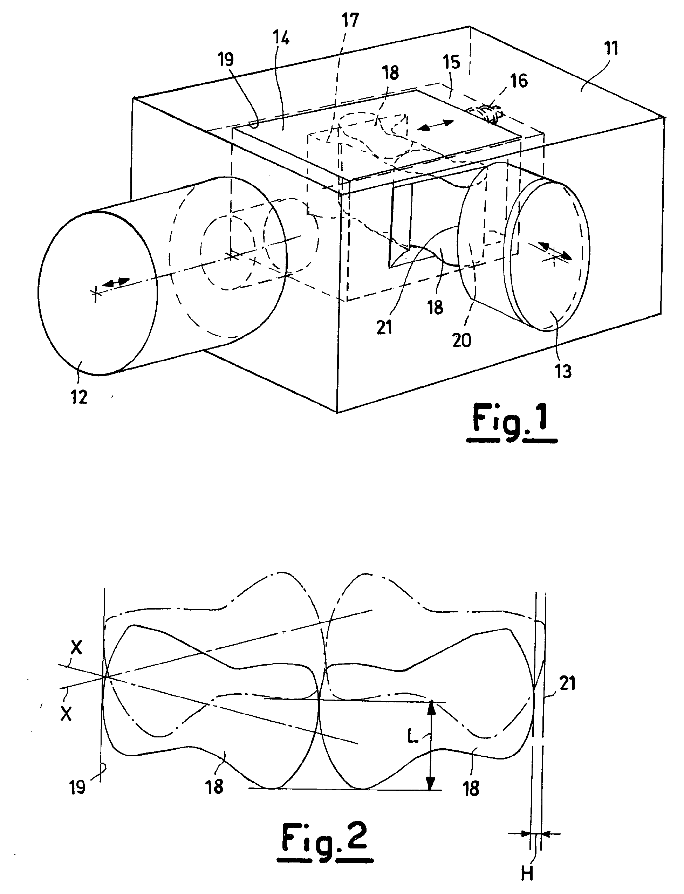

Figure 1, for example, shows that the device comprises a supporting structure 11, hollow inside, suitable for being coupled, on one side, with any type of control actuator 12, mechanical, pneumatic, hydraulic or electric. Said control actuator 12 is associated, by means of the device of the invention, for example, for controlling a stem or pole 13 which operates during braking, by carrying friction material, not shown, and acting on a moving element, linear or rotatory, or equivalent.

The device of the present invention, which allows amplification of the controlling power, comprises a sledge 14 sliding within a housing 15 grooved into the supporting structure 11. At least one elastic element 16, such as a spring, is situated inside said grooved housing 15, which causes the return of the sledge 14 to its rest position, shown in figure 1. Said spring 16, moreover, can act in opposition to the movement of the sledge 14 within said grooved housing 15, to integrate its movement.

According to the present invention, the sledge 14 requires a shaped housing 17 containing a pair of opposing shaped contact bodies 18. In particular, in the example shown, said shaped contact bodies 18 are in the form of biscuits rounded at the ends, which are in contact with each other and with external surfaces. In the example illustrated, the opposing contact bodies 18, can oscillate with respect to each other, thanks to the form of the shaped housing 17, which is narrow in the intermediate zone and widens, with a bell section, at the ends open towards the outside of the sledge 14.

It should be noted that in the arrangement according to the present invention, the first of the two contact bodies 18 is in contact with an inner surface 19 of the grooved housing 15. The second of the two contact bodies 18 has its free end 20 in contact with an end surface 21 of the stem or pole 13 which operates as braking element.

In this way, the inner surface 19 of the grooved housing 15 acts as a reaction plane of the pair of two contact bodies 18, whereas the free end 20 of the other contact body 18 acts specifically as a pusher of the stem 13.

Figure 2 shows, for a better understanding, both an L run of the controlling device consisting of the control actuator 12, and an H run of the controlled device in the form of a stem or pole 13 with a braking function.

The peculiarity of the contact bodies 18 is to have a geometry of the contact surfaces with the respective surfaces, which is such as to maintain, in the field of use, a contact line having a constant inclination, regardless of the oscillation or rotation of the bodies around its own axis X. Figure 2, in fact, shows a first position in a continuous line wherein the contact bodies 18 have not yet performed any action on the stem 13, and a second dotted position wherein the whole thrust action on the stem 13 has been developed.

The use of these contact bodies in a device having a linear movement of flat surfaces, allows a more constant movement transmission ratio (and consequently of the power amplification) with respect to the known connecting rod-handle system mentioned in the state of the art.

The use of two opposing contact bodies 18 to obtain the amplification function of the power, with consequent optimization of the construction and friction limitation, is strongly innovative.

Figure 2 shows the inventive principle of the invention, using two contact bodies in a well-defined shape, in particular for forming the sides. Said inventive principle can also be applied, however, on contact bodies of different shapes, for example with simply flat or convex sides.

It can be easily understood that the functionality of the device of the present invention is easily integrated in small dimensional blocks, produced with compatible interfaces, depending on the assembly requirements.

It is evident that a complete braking system can include two or more groups in the same form as the example illustrated and described above.

It can therefore be seen that a mechanical device for the amplification of the braking and/or blocking power according to the present invention achieves the objectives previously mentioned.

The mechanical device for the amplification of the braking and/or blocking power of the present invention thus conceived, can be subjected to numerous modifications and variations, all included in the same inventive concept.

Furthermore, in practice, the materials used, as also their dimensions and components, can vary according to technical demands.

## Claims

1. A mechanical device for the amplification of the braking and/or blocking power comprising a supporting structure (11), hollow inside (in 15), suitable for being coupled with, on one side, a control actuator (12) for an inner sledge (14) and, on the other side, a controlled component (13) which acts outwardly, wherein said sledge (14) requires a shaped housing (17) containing a pair of opposing shaped contact bodies (18), oscillating in the end zones in contact each other and with external surfaces (19, 21).

2. The mechanical amplification device according to claim 1, **characterized in that** said contact bodies (18) have an elongated form with rounded and connected ends and oscillate with respect to each other in said shaped housing (17), which is narrow in the intermediate zone and widens, with a bell section, at the ends which are open towards the outside of the sledge (14).

3. The mechanical amplification device according to claim 1 or 2, **characterized in that** said contact bodies (18) are in the shape of biscuits.

4. The mechanical amplification device according to any of the previous claims, **characterized in that** said outer surfaces are, on one side, an inner surface (19) of a grooved housing (15) of the supporting structure (11) and, on the other side, an end surface (21) of said controlled element (13) which operates towards the outside.

5. The mechanical amplification device according to any of the previous claims, **characterized in that** said control actuator (12) can be of the mechanical, pneumatic, hydraulic or electric type.

6. The mechanical amplification device according to any of the previous claims, **characterized in that** said controlled element (13) is a stem or pole (13) which operates during braking, carrying friction material.
